# EUROPÄISCHE PATENTSCHRIFT

(11) **EP 3 177 493 B1**
(45) Veröffentlichungstag und Bekanntmachung des Hinweises auf die Patenterteilung: **24.10.2018**
(21) Anmeldenummer: 15753919.8
(22) Anmeldetag: 06.08.2015
(51) Int. Cl.: B60T 13/57

(54) **PNEUMATISCHER BREMSKRAFTVERSTÄRKER**
PNEUMATIC BRAKE BOOSTER
SEROMOTEUR PNEUMATIQUE D'ASSISTANCE AU FREINAGE

(30) Priorität: 07.08.2014 DE 102014215697
(43) Veröffentlichungstag der Anmeldung: 14.06.2017
(73) Patentinhaber: Continental Teves AG & Co. OHG, 60488 Frankfurt am Main (DE)
(72) Erfinder: KREBS, Stephan, 65760 Eschborn (DE); KÖNIG, Harald, 61239 Ober-Mörlen (DE); SCHUBERT, Alexander, 65529 Waldems (DE); BUCHHOLZ, Ingolf, 35510 Butzbach/Griedel (DE); NEU, Thorsten, 65594 Runkel (DE)
(86) Internationale Anmeldenummer: PCT/EP2015/068217
(87) Internationale Veröffentlichungsnummer: WO 2016/020507

(56) Entgegenhaltungen:
- EP-A1- 1 479 583
- WO-A2-99/26826
- US-A1- 2014 182 987

## Beschreibung

Die Erfindung betrifft einen pneumatischen Bremskraftverstärker für eine hydraulische Kraftfahrzeug - Bremsanlage mit einem Steuerventil zur Steuerung von Differenzdruck zwischen einer Arbeitskammer und einer Unterdruckkammer, umfassend einen Tellerventil und einen daran anlegbaren Ventilkolben.

Derartige Bremskraftverstärker sind grundsätzlich, beispielsweise aus EP 1 479 583 A1, bekannt und weit verbreitet. Bei den bekannten Konfigurationen kann jedoch insbesondere bei langsamen und normalen Bremsbetätigungen zu Beginn der Bremsung gelegentlich zu einem sogenannten Übersteuern des Bremskraftverstärkers kommen, wenn plötzlich zu große Luftmengen zwischen der Arbeits- und Unterdruckkammer ausgetauscht werden. Ein derartiger Effekt kann verursacht teilweise laute Plopp-Geräusche verursachen, welche bei Bremskraftverstärker-Applikationen mit einem hohem Vakuum > 850mbar als besonders unangenehm empfunden werden. Dies wird von den Autoherstellern in der heutigen Zeit, in der die Fahrzeuge im Innenraum immer leiser werden, bemängelt.

### Aufgabe

Es stellt sich daher die Aufgabe, einen verbesserten Bremskraftverstärker anzubieten, welcher bei Einhaltung der üblichen Anforderungen an die Dynamik, insbesondere zur Beginn einer Bremsung eine feine und geräuscharme Dosierung der Bremskraft ermöglicht, sowie kostengünstig oder kostenneutral herstellbar ist.

### Lösung und Vorteile

Die Aufgabe wird erfindungsgemäß durch einen Bremskraftverstärker mit den Merkmalen nach dem unabhängigen Patentanspruch 1 gelöst. Unteransprüche und Figurenbeschreibungen geben weitere vorteilhafte Ausführungsformen und Weiterbildungen an.

Durch das Einrichten einer Drosselstelle zwischen dem Ventilkolben und dem Tellerventil des Steuerventils wird ermöglicht, dass abhängig vom Öffnungshub des Ventilkolbens der Luftdurchfluss bei kleinen Hüben gedrosselt wird, bei großen Hüben jedoch weiterhin genügend Dynamik zum Erreichen der benötigten Druckgradienten zur Verfügung steht.

Als Folge wird nicht nur ein verbessertes Geräuschverhalten erreicht, sondern darüber hinaus eine deutliche Verbesserung der Regelgüte bei langsamen und normalen Bremsungen, weil der Luftstrom durch das Steuerventil in der kritischen Anfangsphase eines Bremsvorgangs feiner als bisher dosiert werden kann.

Die Drosselstelle wird eingerichtet, indem an dem Ventilkolben oder dem Tellerventil ein umlaufender axialer Vorsprung derart ausgebildet oder angeordnet wird wobei der Ventilkolben oder das Tellerventil den Vorsprung zumindest teilweise und zumindest zum Beginn eines Bremsvorgangs umschließt. Dadurch wird zwischen dem Vorsprung und dem Ventilkolben oder dem Tellerventil ein zusätzlicher, radialer Luftspalt eingerichtet, der einen unerwünscht hohen Luftstrom effektiv verhindert.

In einer vorteilhaften Weiterbildung der Erfindung kann die radiale Durchtrittsfläche des Luftspalts hubabhängig variabel gestaltet sein, wobei sie entlang zumindest eines Teilhubes des Ventilkolbens variiert.

In verschiedenen Ausgestaltungen und Weiterbildungen können beispielsweise ein Außendurchmesser der radialen Außenfläche des Vorsprungs an seiner Basis größer ausgebildet sein als an seiner Spitze, zudem kann seine radiale Außenfläche auf vielfältige Weise, beispielsweise konisch, konvex, konkav oder komplex ausgebildet sein.

Weiter hin kann der Vorsprung elastisch ausgebildet sein, so dass er durch strömungsbedingte Druckverhältnisse im Luftspalt verformbar ist.

Durch eine konstruktive Veränderung und Anpassung des Außenflächenprofils, des Vorsprungs sowie seiner axialen und radialen Streckung oder auch seiner Elastizität, kann die Veränderung der Durchtrittsfläche des Luftspaltes zwischen de dem Ventilkolben und dem Tellerventil über den Hubweg maßgeblich beeinflusst werden. So kann mit einfachen konstruktiven Mitteln das Dynamik- und Geräuschverhalten zielgerichtet beeinflusst werden.

Durch eine nur sehr geringe konstruktive Veränderung der bestehenden Bauteile und eine Vermeidung von zusätzlichen Komponenten kann der erfindungsgemäße Bremskraftverstärker kostenneutral gegenüber dem bekannten Stand der Technik hergestellt werden.

### Figurenbeschreibung

Weitere Einzelheiten, Merkmale, Vorteile und Anwendungsmöglichkeiten der Erfindung gehen aus Unteransprüchen zusammen mit der Beschreibung und anhand der Zeichnungen hervor. Übereinstimmende Komponenten und Konstruktionselemente werden nach Möglichkeit mit gleichen Bezugszeichen versehen.

Weil der Grundaufbau und Funktion eines gattungsgemäßen Bremskraftverstärkers ausreichend bekannt sind, werden unterstehend lediglich die erfindungsrelevanten Einzelheiten erläutert.

Nachstehend zeigt:
Fig.1 einen Teilschnitt durch ein Steuergehäuse eines bekannten gattungsgemäßen Bremskraftverstärkers.
Fig.2 einen Detailschnitt durch das Steuerventil einer ersten erfindungsgemäßen Ausführungsform.

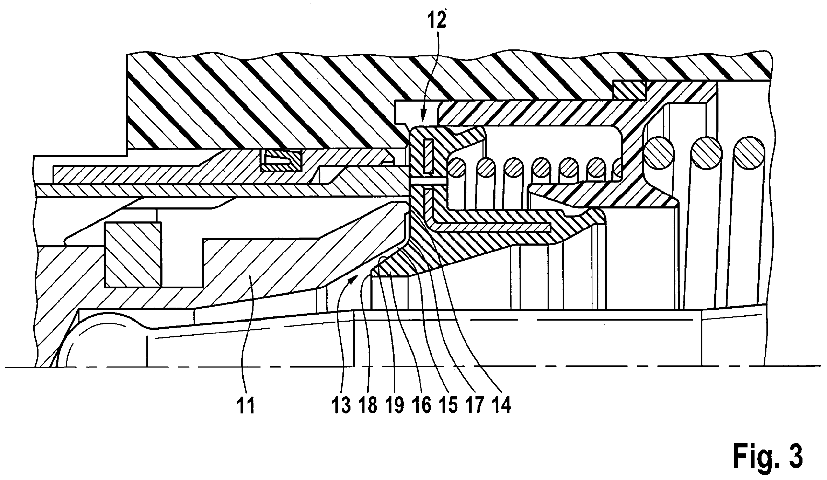

Fig.3 einen Detailschnitt durch das Steuerventil einer weiteren erfindungsgemäßen Ausführungsform.

### Fig.1

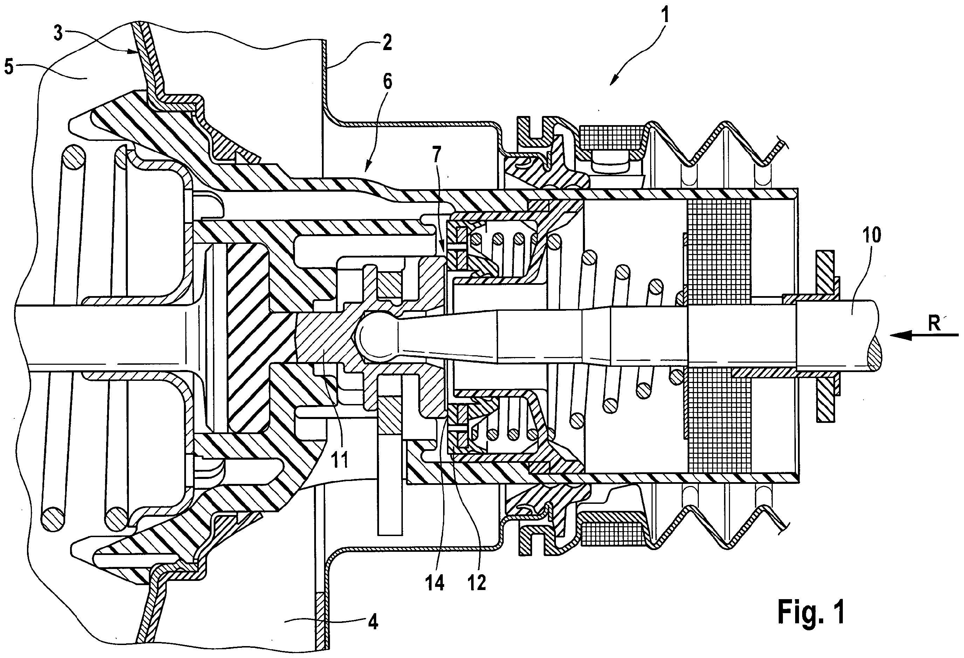

In der Fig.1 ist eine bekannte Ausführung eines nicht verbesserten pneumatischen Bremskraftverstärkers 1 für Kraftfahrzeuge in einer Rücklaufstellung gezeigt. In einem Innenraum des Verstärkergehäuses 2 sind eine Unterdruckkammer 5 und eine Arbeitskammer 4 eingerichtet, die durch eine bewegliche Wand 3 druckdicht voneinander getrennt, jedoch durch ein System von Luftkanälen in dem Steuergehäuse 6 verbindbar sind.

Die Erfindung gilt genauso für einen nicht gezeigten Tandem-Bremskraftverstärker, bei dem die Anzahl der Arbeits- bzw. Unterdruckkammern entsprechend verdoppelt ist.

Die Luftverbindung zwischen den beiden Kammern und der Atmosphäre und somit ein Differenzdruck zwischen den Kammern, wird durch das Steuerventil 7 gesteuert, welches die einzelnen Luftverbindungen öffnet und schließt.

Das Steuerventil 7 beinhaltet ein Tellerventil 12 mit einer elastisch ausgestatteten Oberfläche und einen Ventilkolben 11, welcher mit einem Dichtbereich 14 an dem Tellerventil 12 anliegt und dadurch insbesondere im unbetätigten Ausgangszustand vor einem Bremsvorgang eine Luftverbindung zwischen der Atmosphäre und der Arbeitskammer 4 unterbindet.

Eine Kolbenstage 10 verschiebt den Ventilkolben 11 direkt durch den Fahrer oder automatisiert fahrerunabhängig betätigt in die Hubrichtung R und definiert dadurch seinen Hubweg beziehungsweise den Öffnungshub.

Vor einem Bremsvorgang herrsch in beiden Kammern weitgehend gleicher Druck. Bei einer Verschiebung des Ventilkolbens 11 um einen bestimmten Hubweg wird der Dichtbereich 14 von dem Tellerventil 12 abgehoben und gibt eine Luftverbindung zwischen der Arbeitskammer 4 und der Atmosphäre frei, so dass zwischen dem Ventilkolben 11 und dem Tellerventil 12 sich ein Luftstrom einstellt, bis die die Luftverbindung wieder abgetrennt wird. Wenn der Ventilkolben 11 zu schnell oder zu weit von dem Tellerventil 12 abgehoben wird, kann der Druckgradient abrupt so hohe Werte erreichen, dass es zu Schwingungen und unerwünschten Geräuschen kommt.

### Fig.2

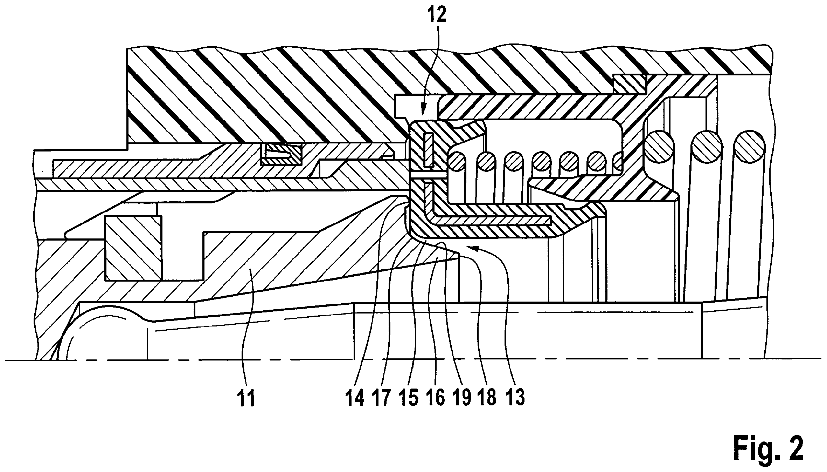

Die Fig.2 zeigt einen Detailschnitt durch das Steuerventil einer ersten erfindungsgemäßen Ausführungsform des Bremskraftverstärkers 1. Wie bereits vorstehend beschrieben, ist im unbetätigten Zustand der Dichtsitz zwischen Ventilkoben 11 und Tellerventil 12 durch den Dichtbereich 14 geschlossen. Beim Betätigen beispielsweise eines Bremspedals wird abhängig von der Betätigungsgeschwindigkeit ein Spalt zwischen Ventilkolben 11 und Tellerventil 12 geöffnet, welcher das Einströmen des Atmosphärendrucks in die Arbeitskammer 4 ermöglicht.

An dem Ventilkolben 11 ist ein umlaufender axialer Vorsprung 16 angeformt, welcher im unbetätigten Zustand durch das Tellerventil 12 von außen radial umschlossen ist und zwischen den beiden Komponenten einen Luftspalt 15 bildet.

Der Vorsprung 16 ist dabei konzentrisch zum Dichtbereich 14, radial innen sowie axial in Richtung Tellerventil (12) vorgestreckt ausgebildet. Dabei ist der Vorsprung 16 vorzugsweise ununterbrochen gestaltet, obschon für bestimmte Applikationen es innerhalb der Erfindung vorstellbar ist, ihn auch mit axialen Schlitzen, Einkerbungen oder radialen Rillen auszustatten, um die Luftströmung im Luftspalt 15 zu beeinflussen.

Die Durchtrittsfläche des Luftspaltes 15 wird bei kleineren Hüben des Ventilkolbens 11 erst langsam vergrößert, wodurch die Regelung des Bremsvorgangs feiner dosierbar ist.

Mit ansteigendem Öffnungshub wird der Vorsprung 16 aus dem Tellerventil 12 vollständig herausgeschoben, so dass beispielsweise bei voll- oder Notbremsungen der Luftstrom ungehindert passieren kann und so die benötigte Dynamik gewährleistet ist.

Die abgebildete Ausführungsform des Vorsprungs 16 besitzt eine kegelförmige radiale Außenfläche 19. Der Außendurchmesser der Außenfläche 19 ist an der Basis 17 des Vorsprungs 16 signifikant größer ausgebildet, als an seiner Spitze 18.

Innerhalb der Erfindung sind jedoch auch weitere, hier nicht gezeigte Formgebungen des Vorsprungs 16 vorstellbar. Durch die konstruktive Gestaltung der Dimensionen des Vorsprungs 16, beispielsweise seiner axialen und radialen Streckung, der Durchmesser an der Basis 17 und an der Spitze 18 und insbesondere der Formgebung der Außenfläche 19 kann die Größe der Durchtrittsfläche des Luftspaltes 15 entlang des Hubes des Ventilkolbens nach Wunsch gestaltet werden.

So kann eine kontinuierliche Vergrößerung, eine konstante Einhaltung oder gar eine Verringerung des Luftspaltes 15 über den Hubweg des Ventilkolbens 11 realisiert und somit die gewünschte Beeinflussung des Druckgradienten erreicht werden.

Innerhalb der Erfindung kann die Außenfläche 19 nicht nur, wie gezeigt konisch, sondern auch konvex, konkav oder komplex nach einem Funktionsprofil (beispielsweise parabolisch) ausgebildet sein.

Durch den Einsatz des Vorsprunges 16 entsteht eine Drosselstelle 13, die insbesondere zur Beginn einer Bremsung, bei kleinen Huben des Ventilkolbens 11 den Luftstrom zwischen den beiden Komponenten reduziert und einen zu hohen Druckgradienten verhindert.

### Fig.3

Die Fig.2 zeigt einen Detailschnitt durch das Steuerventil einer weiteren erfindungsgemäßen Ausführungsform des Bremskraftverstärkers 1.

Grundsätzlich gelten dabei die gleichen Wirk- sowie Gestaltungsprinzipien wie in der vorstehend beschrieben Ausführung. Im Unterschied dazu ist der Vorsprung 16 jedoch an dem Tellerventil 12 angeordnet, so dass er im unbetätigten Ausgangszustand in den Ventilkolben 11 hineinragt und von diesem radial außen umschlossen ist.

Weil das Tellerventil 12 zumindest teilweise aus einem elastischen Werkstoff besteht, kann ein daran angeformter Vorsprung 16 zusätzlich so ausgelegt sein, dass er in Abhängigkeit von den Strömungsverhältnissen in dem Luftspalt 15 sich elastisch radial nach außen oder nach innen verformen kann.

So würde beispielsweise eine besonders hohe Luftgeschwindigkeiten und somit ein hoher Unterdruck in dem Luftspalt 15 eine Verformung des Vorsprunges 16 radial nach außen, eine dadurch bedingte Verringerung der Durchtrittsfläche des Luftspaltes 15 und somit eine quasiautomatische Regelung bewirken.

### Bezugszeichen

- 1: Bremskraftverstärker
- 2: Verstärkergehäuse
- 3: Wand
- 4: Arbeitskammer
- 5: Unterdruckkammer
- 6: Steuergehäuse
- 7: Steuerventil
- 10: Kolbenstange
- 11: Ventilkolben
- 12: Tellerventil
- 13: Drosselstelle
- 14: Dichtbereich
- 15: Luftspalt
- 16: Vorsprung
- 17: Basis
- 18: Spitze
- 19: Außenfläche
- R: Hubrichtung

## Patentansprüche

1. Pneumatischer Bremskraftverstärker (1) für Kraftfahrzeuge, mit einem Verstärkergehäuse (2), dessen Innenraum durch wenigstens eine, mit einem pneumatischen Differenzdruck beaufschlagbare, axial bewegliche Wand (3) in wenigstens eine Arbeitskammer (4) und wenigstens eine Unterdruckkammer (5) unterteilt ist, mit einem Steuergehäuse (8) und einem, einen Differenzdruck zwischen der Arbeitskammer (4) und der Unterdruckkammer (5) steuernden, in dem Steuergehäuse (6) angeordneten Steuerventil (7), welches einen Luftstrom zwischen der Arbeitskammer (4) und der Unterdruckkammer (5) oder einer Umgebungsatmosphäre steuert, wobei das Steuerventil (7) ein Tellerventil (12) sowie einen an das Tellerventil (12) mit einem Dichtbereich (14) abdichtend anlegbaren und in eine Hubrichtung R verschiebbaren Ventilkolben (11) aufweist, **dadurch gekennzeichnet, dass** zwischen dem Ventilkolben (11) und dem Tellerventil (12) eine Drosselstelle (13) zur hubabhängigen Drosselung des Luftstromes vorgesehen ist, wobei an dem Ventilkolben (11) oder dem Tellerventil (12) ein umlaufender axialer Vorsprung (16) derart ausgebildet ist, dass der Ventilkolben (11) oder das Tellerventil (12) den Vorsprung (16) zumindest teilweise radial umschließt, so dass zwischen dem Vorsprung (16) und dem Ventilkolben (11) oder dem Tellerventil (12) in einem unbetätigten Zustand des Steuerventils (7) ein radialer Luftspalt (15) vorhanden ist.

2. Pneumatischer Bremskraftverstärker (1) nach Anspruch 1 **dadurch gekennzeichnet, dass** der Luftspalt (15) durch eine radiale Außenfläche (19) des Vorsprungs (16) begrenzt ist und die Außenfläche (19) derart geformt ist, dass eine radiale Durchtrittsfläche des Luftspalts (15) sich entlang zumindest eines Teilhubes des Ventilkolbens (11) ändert.

3. Pneumatischer Bremskraftverstärker (1) nach einem der Ansprüche 1 bis 2 **dadurch gekennzeichnet, dass** ein Außendurchmesser der radialen Außenfläche (19) des Vorsprungs (16) an einer Basis (17) des Vorsprungs (16) größer ausgebildet ist, als an seiner Spitze (18).

4. Pneumatischer Bremskraftverstärker (1) nach Anspruch 3 **dadurch gekennzeichnet, dass** die radiale Außenfläche (19) des Vorsprungs (16) konisch ausgebildet ist.

5. Pneumatischer Bremskraftverstärker (1) nach Anspruch 3 **dadurch gekennzeichnet, dass** die radiale Außenfläche (19) des Vorsprungs (16) konvex ausgebildet ist.

6. Pneumatischer Bremskraftverstärker (1) nach Anspruch 3 **dadurch gekennzeichnet, dass** die radiale Außenfläche (19) des Vorsprungs (16) konkav ausgebildet ist.

7. Pneumatischer Bremskraftverstärker (1) nach Anspruch 1 **dadurch gekennzeichnet, dass** der Vorsprung (16) an dem Ventilkolben (11) ausgebildet ist.

8. Pneumatischer Bremskraftverstärker (1) nach Anspruch 1 **dadurch gekennzeichnet, dass** der Vorsprung (16) an dem Tellerventil (12) ausgebildet ist.

9. Pneumatischer Bremskraftverstärker (1) nach Anspruch 8 **dadurch gekennzeichnet, dass** der Vorsprung (16) elastisch derart ausgebildet ist, dass er durch strömungsbedingte Druckverhältnisse im Luftspalt (15) bei Bremsungen verformbar ist.

## Claims

1. Pneumatic brake booster (1) for motor vehicles having a booster housing (2), the interior space of which is subdivided by at least one axially movable wall (3) exposed to a pneumatic differential pressure into at least one working chamber (4) and at least one vacuum chamber (5), and having a control housing (6) and a control valve (7), which is arranged in the control housing (6) and controls a pressure differential between the working chamber (4) and the vacuum chamber (5), and which controls an air flow between the working chamber (4) and the vacuum chamber (5) or a surrounding atmosphere, wherein the control valve (7) comprises a disk valve (12) together with a valve piston (11), which can be joined by a sealing area (14) to the disk valve (12) to form a seal and is displaceable in a lift direction R, **characterized in that** a restrictor (13) is provided between the valve piston (11) and the disk valve (12) for restriction of the air flow as a function of the lift, wherein a circumferential, axial projection (16) is formed on the valve piston (11) or the disk valve (12) in such a way that the valve piston (11) or the disk valve (12) encloses the projection (16) radially at least in part, so that a radial air gap (15) exists between the projection (16) and the valve piston (11) or the disk valve (12) in an unactuated state of the control valve (7)

2. Pneumatic brake booster (1) according to Claim 1, **characterized in that** the air gap (15) is delimited by a radial outer face (19) of the projection (16) and the outer face (19) is formed such that a radial passage area of the air gap (15) along at least a portion of the lift of the valve piston (11).

3. Pneumatic brake booster (1) according to one of Claims 1 to 2, **characterized in that** an outside diameter of the radial outer face (19) of the projection (16) is formed larger at a base (17) of the projection (16) than at its tip (18).

4. Pneumatic brake booster (1) according to Claim 3, **characterized in that** the radial outer face (19) of the projection (16) is conically formed.

5. Pneumatic brake booster (1) according to Claim 3, **characterized in that** the radial outer face (19) of the projection (16) is convexly formed.

6. Pneumatic brake booster (1) according to Claim 3, **characterized in that** the radial outer face (19) of the projection (16) is concavely formed.

7. Pneumatic brake booster (1) according to Claim 1, **characterized in that** the projection (16) is formed on the valve piston (11).

8. Pneumatic brake booster (1) according to Claim 1, **characterized in that** the projection (16) is formed on the disk valve (12).

9. The pneumatic brake booster (1) according to Claim 8, **characterized in that** the projection (16) is of elastic design, such that it can be deformed by flow-induced pressure ratios in the air gap (15) during braking.

## Revendications

1. Servomoteur pneumatique d'assistance au freinage (1) pour des véhicules automobiles, avec un boîtier de servomoteur (2), dont l'espace intérieur est divisé en au moins une chambre de travail (4) et au moins une chambre de dépression (5) au moyen d'au moins une paroi mobile axialement (3) pouvant être soumise à une pression différentielle pneumatique, avec un boîtier de commande (8) et une soupape de commande (7) commandant une pression différentielle entre la chambre de travail (4) et la chambre de dépression (5) et disposée dans le boîtier de commande (6) et qui commande un courant d'air entre la chambre de travail (4) et la chambre de dépression (5) ou une atmosphère ambiante, dans lequel la soupape de commande (7) présente une soupape à disque (12) ainsi qu'un piston de soupape (11) pouvant être appliqué de façon étanche avec une zone d'étanchéité (14) sur la soupape à disque (12) et pouvant se déplacer dans une direction de levée R, **caractérisé en ce qu'**il est prévu entre le piston de soupape (11) et la soupape à disque (12) un point d'étranglement (13) pour l'étranglement du courant d'air en fonction de la levée, dans lequel une saillie axiale périphérique (16) est formée sur le piston de soupape (11) ou sur la soupape à disque (12), de telle manière que le piston de soupape (11) ou la soupape à disque (12) entoure radialement au moins partiellement la saillie (16), de telle manière qu'il se trouve entre la saillie (16) et le piston de soupape (11) ou la soupape à disque (12) une fente d'air radiale (15) dans l'état non actionné de la soupape de commande (7).

2. Servomoteur pneumatique d'assistance au freinage (1) selon la revendication 1, **caractérisé en ce que** la fente d'air (15) est limitée par une face extérieure radiale (19) de la saillie (16) et la face extérieure (19) est formée de telle manière qu'une surface de passage radiale de la fente d'air (15) varie le long d'au moins une levée partielle du piston de soupape (11).

3. Servomoteur pneumatique d'assistance au freinage (1) selon une des revendications 1 à 2, **caractérisé en ce qu'**un diamètre extérieur de la face extérieure radiale (19) de la saillie (16) est plus grand à une base (17) de la saillie (16) qu'à sa pointe (18).

4. Servomoteur pneumatique d'assistance au freinage (1) selon la revendication 3, **caractérisé en ce que** la face extérieure radiale (19) de la saillie (16) est de forme conique.

5. Servomoteur pneumatique d'assistance au freinage (1) selon la revendication 3, **caractérisé en ce que** la face extérieure radiale (19) de la saillie (16) est de forme convexe.

6. Servomoteur pneumatique d'assistance au freinage (1) selon la revendication 3, **caractérisé en ce que** la face extérieure radiale (19) de la saillie (16) est de forme concave.

7. Servomoteur pneumatique d'assistance au freinage (1) selon la revendication 1, **caractérisé en ce que** la saillie (16) est formée sur le piston de soupape (11).

8. Servomoteur pneumatique d'assistance au freinage (1) selon la revendication 1, **caractérisé en ce que** la saillie (16) est formée sur la soupape à disque (12).

9. Servomoteur pneumatique d'assistance au freinage (1) selon la revendication 8, **caractérisé en ce que** la saillie (16) est réalisée sous forme élastique, de telle manière qu'elle puisse être déformée par des rapports de pression liés à l'écoulement dans la fente d'air (15) lors de freinages.
